Europäisches Patentamt

European Patent Office

Office européen des brevets

(19)

(11) Publication number: **0 480 587 B1**

(12) **EUROPEAN PATENT SPECIFICATION**

(45) Date of publication of patent specification: **17.11.94**　(51) Int. Cl.[5]: **C01F 11/18**

(21) Application number: **91308433.1**

(22) Date of filing: **16.09.91**

The file contains technical information submitted after the application was filed and not included in this specification

(54) **Precipitated calcium carbonate.**

(30) Priority: **27.09.90 GB 9021072**

(43) Date of publication of application:
**15.04.92 Bulletin  92/16**

(45) Publication of the grant of the patent:
**17.11.94 Bulletin  94/46**

(84) Designated Contracting States:
**AT BE CH DE DK ES FR GR IT LI LU NL SE**

(56) References cited:
**EP-A- 0 140 644
DE-B- 1 592 147
US-A- 2 964 382
US-A- 3 920 800**

**PATENT ABSTRACTS OF JAPAN vol. 11, no.
326 (C-454)(2773) 23 October 1987**

(73) Proprietor: **ECC INTERNATIONAL LIMITED
John Keay House
St. Austell Cornwall PL25 4DJ (GB)**

(72) Inventor: **Jones, Thomas Richard
11, North Hill Park
St. Austell, Cornwall PL25 4BJ (GB)**
Inventor: **Bleakley, Ian Stuart
30, Trembear Road
St. Austell, Cornwall PL25 4NY (GB)**

(74) Representative: **Austin, Hedley William
Urquhart-Dykes & Lord
Alexandra House
1 Alexandra Road
Swansea West Glamorgan SA1 5ED (GB)**

EP 0 480 587 B1

**Description**

Background of Invention

The present invention concerns calcium carbonate suitable for use especially as a filler in papermaking or as a pigment in a paper coating composition, and a process for the preparation thereof.

Since about 1920, chemically precipitated calcium carbonate has been used as a pigment or filler in the paper industry. Various chemical routes have been followed to precipitate the calcium carbonate, but the most frequently used methods are based on the double decomposition of sodium carbonate with either calcium hydroxide or calcium chloride, or on the carbonation with carbon dioxide gas of an aqueous suspension of calcium hydroxide ("milk of lime"). The double decomposition processes generally make use of by-products or other chemical processes and therefore tend to yield calcium carbonate products which contain unwanted salts. The process based on the carbonation of milk of lime is performed in three stages; firstly, the calcination of raw limestone to produce calcium oxide or "quicklime"; secondly, the "slaking" of the quicklime with water to produce an aqueous suspension of calcium hydroxide; and finally, the carbonation of the calcium hydroxide with a gas comprising carbon dioxide.

In order to prepare a precipitated calcium carbonate for the paper industry a process based upon the carbonation of milk of lime is preferred because there is no serious problem of contamination of the product with unwanted salts, and each of the three stages in the production process can be controlled to adjust the properties of the final product.

Calcium carbonate can be precipitated from aqueous solution in three different crystal forms: the vaterite form which is thermodynamically unstable, the calcite form which is the most stable and the most abundant in nature, and the aragonite form which is metastable under normal ambient conditions of temperature and pressure, but converts to calcite at elevated temperature. The aragonite form crystallises as long, thin needles having a length:diameter ratio of about 10:1, but the calcite form exists in several different shapes of which the most commonly found are the rhombohedral shape in which the length and the diameter of the crystals are approximately equal, and the crystals may be aggregated or unaggregated; and the scalenohedral shape in which the crystals are like double, two-pointed pyramids having a length:width ratio of about 4:1, and which are generally aggregated. All these forms of calcium carbonate can be prepared by carbonation of milk of lime by suitable variation of the process conditions.

A particularly desirable type of pigment for the paper industry has come to be known as a "bulking pigment". The opacity and brightness of a paper sheet filled or coated with a mineral material depend on the ability of the sheet to scatter light. If the pigment consists of fine particles which are separated by small spaces or voids, the scattering effect is generally enhanced, and is found to be at an optimum when the width of the spaces or voids is about half the wavelength of visible light, or about 0.25 $\mu$m (microns). Bulking pigments, or pigments consisting of fine particles separated by spaces or voids of about the optimum size are desirable in the paper industry on account of their ability to scatter visible light, but if the pigment consists of discrete fine particles, the retention of these particles in a matrix of cellulosic papermaking fibres is poor. To obtain good retention, the fine particles must be aggregated together to form clusters of larger size.

High light scattering pigments currently available to the paper industry include titanium dioxide, which is very effective but also expensive, and fine kaclin particles which have been aggregated either thermally or by chemical means. The pigments derived from kaolin are also effective in scattering light, but are again expensive. Of the forms of calcium carbonate, the aragonite form is effective as a high light scattering pigment but the process conditions necessary for its production are stringent and difficult to control. The rhombohedral form has crystals which are generally unaggregated and which pack together too closely and do not leave between them voids or spaces of the appropriate size. The scalenohedral form may be produced relatively inexpensively and the process conditions may be readily controlled to give aggregates of fine crystals separated by spaces of substantially the optimum size for light scattering, and is therefore the preferred form of calcium carbonate for use as a bulking pigment in the paper industry.

It is an object of this invention to provide a calcium carbonate bulking pigment for the paper industry which is at least as effective in light scattering as an aggregated kaolin pigment but less expensive.

Prior Art

US Patent 2081112 (N. Statham & T.G. Leek) describes a process for producing precipitated calcium carbonate by carbonating milk of lime. It is recognised that the more violent the agitation in the gas absorber, the finer will be the product, and the aim is to create a fine mist of calcium hydroxide slurry in the presence of the carbon dioxide-containing gas. The temperature in the gas absorber is maintained at 50-60 degrees Celsius, preferably around 55 degrees Celsius.

US Patent 2964382 (G.E. Hall, Jr) concerns the production of precipitated calcium carbonate by various chemical routes in which calcium ions are contacted with carbonate ions in a precipitation zone, including the carbonation of milk of lime. High shear, intense turbulence is provided in the precipitation zone by means of an impeller rotating at a peripheral speed of at least 1160 feet per minute (589 cm. per sec).

US Patent 3320026 (W.F. Waldeck) describes the production of different forms of calcium carbonate including the scalenohedral form. The calcium hydroxide is relatively coarse and contains at least 50% by weight of particles larger than 10 $\mu$m (microns). The temperature in the gas absorber is maintained at less than 20 degrees Celsius.

US Patent 4018877 (R.D.A. Woods) describes a carbonation process in which there is added to the suspension in the gas absorber, after the calcium carbonate primary nucleation stage and before completion of the carbonation step, a complexing agent for calcium ions, such as ethylenediamine tetraacetic acid (EDTA), aminotriacetic acid, aminodiacetic acid or a hydroxy polycarboxylic acid.

US Patent 4157379 (J. Arika et al) describes the production of a chain-structured precipitated calcium carbonate by the carbonation of calcium hydroxide suspended in water in the presence of a chelating agent and a water soluble metal salt.

US Patent 4367207 (D.B. Vanderheiden) describes a process in which carbon dioxide containing gas is introduced into an aqueous calcium hydroxide slurry containing an anionic organopolyphosphonate electrolyte to give a finely divided precipitated calcium carbonate.

Statement of Invention

A precipitated calcium carbonate having improved light scattering properties is prepared by a process comprising the following steps:

a) slaking quicklime in an aqueous medium, so as to produce a suspension of calcium hydroxide;

b) passing the suspension of calcium hydroxide through a sieve having an aperture size in the range from 40 to 70 microns;

c) converting the calcium hydroxide into a finely dispersed condition by subjecting the suspension to high energy, high shear agitation;

d) carbonating the finely dispersed slaked lime of the suspension formed in step (c) by passing therethrough sufficient of a gas comprising carbon dioxide to cause the pH of the suspension to fall to substantially neutral; and

e) separating the precipitated calcium carbonate formed in step (d) from the aqueous medium in which it is suspended;

in which the high energy, high shear agitation is terminated prior to the carbonation of step (d), and in which the suspension is subjected to substantially continuous agitation during the carbonation of step (d).

In step (c) the high energy, high shear agitation may be provided, for example, by means of a high-speed turbine impeller, by ultrasonics, or by agitating the suspension with a particulate grinding medium comprising hard particles of diameter from about 0.25mm to about 2mm.

In order to produce calcium carbonate in the scalenohedral form, the quicklime is preferably added to sufficient of the aqueous medium to give, on completion of step (a), a suspension having a calcium hydroxide concentration of from 0.7M to 4M (5-30% w/v). The temperature of the aqueous medium is preferably maintained in the ranged from 30 to 50°C, and the aqueous medium is preferably subjected to substantially continuous agitation during step (a). The duration of step (a) is conveniently in the range from 15 to 30 minutes.

In step (d), in order to produce calcium carbonate in the scalenohedral form, the suspension of finely dispersed slaked lime is preferably diluted if necessary, to a concentration of not more than 15% w/v and maintained at a temperature in the range from 40 to 65 degrees Celsius. The carbonating gas preferably contains from 5% to 50% by volume of carbon dioxide, the remainder being conveniently air or nitrogen. The carbon dioxide-containing gas is preferably admitted into the suspension of finely dispersed slaked lime in the form of fine bubbles. This may be achieved, for example, by admitting the gas under pressure through a perforated plate gas sparger. The rate of admission of the carbon dioxide-containing gas is preferably in the range from 0.02 to 0.10 moles of carbon dioxide per minute per mole of calcium hydroxide. The suspension is preferably agitated substantially continuously throughout the carbonation step, suitably by means of an impeller rotating at a peripheral speed of at least 200 cm. per second, and preferably at least 600 cm. per second. The pH of the suspension is preferably monitored throughout the carbonation step so that the admission of the carbon dioxide-containing gas may be stopped when the pH

3

has fallen to substantially neutral.

In step (e) the precipitated calcium carbonate is preferably separated from the aqueous medium in which it is suspended by filtration. The filter cake may then be thermally dried and milled in order to provide a substantially dry, powdered product, or, alternatively, the filter cake may be redispersed by means of a dispersing agent for the calcium carbonate in order to provide a concentrated aqueous suspension suitable for use, for example, in a paper coating composition.

The present invention will now be described in more detail, with reference to the following illustrative Examples.

EXAMPLE 1

Samples of quicklime prepared by calcining a French limestone, were added to sufficient water at a temperature of 40 degrees Celsius to give, at the completion of step (a) respectively, slurries having calcium hydroxide concentrations of 1M (7.4% w/v), 2M (14.8% w/v) and 4M (29.6% w/v). In each case the mixture was stirred vigorously for 25 minutes and was then poured through a sieve having a nominal aperture 53 $\mu$m (No. 300 mesh British Standard Sieve) in order to remove any undispersed residue such as unslaked quicklime.

Samples of each of the three slurries which had been passed through the sieve were subjected to high shear, high intensity mixing in a Waring Blendor and at one minute intervals the viscosity of the slurry measured using a Brookfield Viscometer at a spindle speed of 100 rpm. For each slurry a graph was drawn of apparent viscosity against time. It was found that for the 1M slurry the viscosity reached a maximum after 15 minutes and then began to decrease: in the case of the 2M slurry the viscosity reached a maximum after 10 minutes; but in the case of the 4M slurry the viscosity was still rising after 30 minutes.

The Waring Blendor is a high speed stirring device equipped with an impeller of diameter 47.6 mm rotating at a speed of 22,500 rpm, thus giving a peripheral speed of 56m. per second.

150 ml portions of each of the 1M, 2M and 4M suspensions of slaked lime which had passed through the sieve were then subjected to to high shear mixing in the Waring Blendor for 15 minutes, 10 minutes and 20 minutes. respectively, after which the 2M and 4M suspensions were diluted to 1M, and 150 ml portions of each suspension were transferred to a carbonation vessel.

The carbonation vessel was surrounded by a water jacket, the temperature of the water flowing through which was thermostatically controlled to maintain a temperature of 45 degrees Celsius in the vessel. Carbon dioxide-containing gas was admitted into the vessel under pressure through a perforated plate gas sparger mounted at the bottom of the vessel. Immediately above the sparger was mounted a variable-speed impeller of diameter 30 mm.

The carbon dioxide-containing gas consisted of a mixture of 25% by volume of carbon dioxide and 75% by volume of compressed air and was admitted at a rate of 0.04 moles of carbon dioxide per minute per mole of calcium hydroxide. The stirrer was rotated at a speed of 2,000 rpm (peripheral speed 313 cm. per second) throughout the carbonation step, and the pH of the suspension was continuously monitored. When the pH of the suspension had fallen to 7 the carbonation was considered to be complete and the flow of the carbon dioxide-containing gas stopped.

In each case the precipitated calcium carbonate was separated from the aqueous medium by filtration and the Kubelka-Munk scattering coefficient S was then measured by the technique described in Example 1 of our U.K. Patent application 9016552.3.

As a comparison, the experiment was repeated as described above except that the step of high shear mixing in the Waring Blendor was omitted.

4

The results are set forth in Table 1 below:-

TABLE 1

| | Scattering coefficient $(m^2 . kg^{-1})$ |
|---|---|
| No high shear mixing | 244 |
| High shear mixing - 1M $Ca(OH)_2$ | 307 |
| High shear mixing - 2M $Ca(OH)_2$ | 291 |
| High shear mixing - 4M $Ca(OH)_2$ | 301 |

These results show that precipitated calcium carbonates having significantly higher scattering coefficients are obtained when the calcium hydroxide is subjected to high shear mixing before carbonation is commenced. The differences in the scattering coefficient for the precipitated calcium carbonates obtained from slaked lime suspensions subjected to high shear mixing at different concentrations are considered to be within the limits of experimental accuracy.

EXAMPLE 2

Samples of quicklime prepared by calcining the same limestone as was used in Example 1 were added to sufficient water at a temperature of 40 degrees Celsius to give, at the completion of step (a), respectively, slurries having calcium hydroxide concentrations of 2M (14.8% w/v) and 4M (29.6% w/v). In each case the mixture was stirred vigorously for 25 minutes and was then passed through a sieve having a nominal aperture 53 $\mu$m (No. 300 mesh British Standard Sieve) in order to remove any undispersed residue.

150 ml portions of each of the 2M and 4M suspensions of slaked lime which had passed through the sieve were then subjected to high shear mixing in the Waring Blendor for 10 minutes and 20 minutes, respectively, after which they were diluted to 1M, and 150 ml portions of each suspension were transferred to the carbonation vessel.

Each suspension was carbonated in the same way as is described in Example 1 except that in each case the stirrer was rotated at a speed of 500 rpm (peripheral speed 79 cm. per second).

In each case the precipitated calcium carbonate was separated from the aqueous medium by filtration and the Kubelka-Munk scattering coefficient S was measured.

As a comparison the experiment was repeated as described above except that the step of high shear mixing in the Waring Blendor was omitted.

The results are set forth in Table II below:-

TABLE II

| | Scattering coefficient $(m^2 . kg^{-1})$ |
|---|---|
| No high shear mixing | 195 |
| High shear mixing - 2M $Ca(OH)_2$ | 248 |
| High shear mixing - 4M $Ca(OH)_2$ | 228 |

When these results are compared with those obtained in Example 1 it can be seen that it is important to provide high speed stirring during the carbonation step as well as high shear mixing of the calcium hydroxide slurry before carbonation.

EXAMPLE 3

A sample of quicklime prepared by calcining the same limestone as was used in Example 1 was added to sufficient water at a temperature of 40 degrees Celsius to give, at the completion of step (a), a suspension having a calcium hydroxide concentration of 2M (14.8% w/v). The mixture was stirred vigorously for 25 minutes and was then poured through a No. 300 mesh British Standard sieve in order to remove any undispersed residue. An ultrasonic probe was inserted into the suspension which had passed through the sieve and samples were withdrawn and the apparent viscosity of each sample was measured by means of a Brookfield Viscometer at a spindle speed of 100 rpm. Each sample was then diluted with water to a calcium hydroxide concentration of 1M (7.4% w/v) and carbon dioxide gas was passed through the diluted suspension under the conditions described in Example 1 above. The precipitated calcium carbonate was separated from the aqueous medium by filtration and the Kubelka-Munk scattering coefficient S was measured.

The results are set forth in Table III below:-

### TABLE III

| Duration of ultrasonic treatment (mins.) | Apparent viscosity (mPa.s) | Scattering coefficient ($m^2 Kg^{-1}$) |
|---|---|---|
| 0 | 300 | 211 |
| 5 | 940 | 233 |
| 10 | 1510 | 280 |
| 15 | 1700 | 273 |
| 30 | 2500 | 261 |

These results show that the scattering coefficient of the precipitated calcium carbonate appears to reach a maximum after 10 minutes of ultrasonic treatment, even though the apparent viscosity of the suspension continues to rise after this time.

EXAMPLE 4

Samples of quicklime prepared by calcining the same limestone as was used in Example 1 were added to sufficient water at a temperature of 40 degrees Celsius to give, at the completion of step (a), suspensions having calcium hydroxide concentrations of, respectively, 1M (7.4% w/v), 2M (14.8% w/v) and 4M (29.6% w/v). In each case the mixture was stirred vigorously for 25 minutes and was then poured through a sieve having a nominal aperture 53 $\mu$m (No. 300 mesh British Standard sieve) in order to remove any undispersed residue. Portions of all three of the suspensions which had passed through the sieve were subjected to high energy, high shear agitation in an attrition grinding mill which was provided with an impeller rotating on a central, vertical shaft and which was charged with a grinding medium consisting of Leighton Buzzard silica sand of granule size in the range from 0.05 mm to 1.0 mm. Portions of the suspensions having calcium hydroxide concentrations of 1M and 4M were subjected to agitation for times sufficient to dissipate in the suspensions 200 kwh and 800 kwh of energy, respectively, per tonne of dry calcium hydroxide (720 KJ per kg and 2880 KJ per kg). The suspension having a calcium hydroxide concentration of 2M was subjected to agitation only for a time sufficient to dissipate in the suspension 200 kWh of energy per tonne of dry calcium hydroxide.

At the completion of the attrition grinding treatment the samples of calcium hydroxide suspension were separated from the sand by pouring through a sieve having a nominal aperture 0.25 mm (No. 60 mesh British Standard sieve).

The samples of the suspension having calcium hydroxide concentrations of 2M and 4M, respectively, were then each diluted with water to a calcium hydroxide concentration of 1M and all of the suspensions were then carbonated with carbon dioxide gas under the conditions described in Example 1 above.

In each case the precipitated calcium carbonate was separated from the aqueous medium by filtration and the KubelkaMunk scattering coefficient S was measured.

The results are set forth in Table IV below:-

## TABLE IV

| Calcium Concentration | Energy dissipated (kW.hr per tonne) | Scattering ($m^2.kg^{-1}$) |
|---|---|---|
| 1M | 200 | 294 |
| 1M | 800 | 300 |
| 2M | 200 | 299 |
| 4M | 200 | 317 |
| 4M | 800 | 331 |

## Claims

1. A process of preparing precipitated calcium carbonate comprising the following steps:

   a) slaking quicklime in an aqueous medium, so as to produce a suspension of calcium hydroxide;

   b) passing the suspension of calcium hydroxide through a sieve having an aperture size in the range from 40 to 70 microns;

   c) converting the calcium hydroxide into a finely dispersed condition by subjecting the suspension to high energy, high shear agitation;

   d) carbonating the finely dispersed slaked lime of the suspension formed in step (c) by passing therethrough sufficient of a gas comprising carbon dioxide to cause the pH of the suspension to fall to substantially neutral; and

   e) separating the precipitated calcium carbonate formed in step (d) from the aqueous medium in which it is suspended; characterised in that said high energy, high shear agitation is terminated prior to said carbonation of stop (d), and that said suspension is subjected to substantially continuous agitation during said carbonation of step (d).

2. A process according to claim 1, which is such that it produces, on completion of step (a), a suspension having a calcium hydroxide concentration of from 0.7M to 4M (5 to 30% w/v).

3. A process according to either of claims 1 or 2, wherein said aqueous medium is maintained at a temperature within the range from 30 to 50°C.

4. A process according to any of claims 1 to 3, wherein said aqueous medium is subjected to substantially continuous agitation during step (a).

5. A process according to any of claims 1 to 4, wherein said suspension of slaked lime is diluted to a concentration of not more than 15% weight/volume and maintained at a temperature in the range from 40 to 65°C during step (d).

6. A process according to any of claims 1 to 5, wherein said carbonating gas contains from 5% to 50% by volume of carbon dioxide, the remainder being air or nitrogen.

7. A process according to any of claims 1 to 6, wherein said carbonating gas is admitted into the suspension of finely dispersed slaked lime in the form of fine bubbles.

8. A process according to any of claims 1 to 7, wherein said carbonating gas is admitted into the suspension of finely dispersed slaked lime at a rate in the range from 0.02 to 0.10 moles of carbon dioxide per minute per mole of calcium hydroxide.

9. A process according to any of claims 1 to 8, wherein said suspension is agitated substantially continuously at a peripheral speed of at least 600 cm per second throughout step (d).

10. A process according to any of claims 1 to 9, wherein the addition of the said carbonating gas is stopped when the pH of the suspension has fallen to substantially neutral.

**Patentansprüche**

1. Verfahren zur Herstellung gefällten Calciumcarbonats, das die folgenden Schritte umfaßt:
   a) Löschen ungelöschten Kalks in einem wäßrigen Medium, um eine Suspension von Calciumhydroxid zu erzeugen;
   b) Durchleiten der Calciumhydroxidsuspension durch ein Sieb mit einer Öffnungsgröße im Bereich von 40 - 70 Mikrometern;
   c) Überführen des Calciumhydroxids in einen fein dispergierten Zustand, indem die Suspension einer Rührbewegung mit hoher Energie und hoher Schubkraft unterworfen wird;
   d) Carbonatisieren (carbonating) des fein dispergierten gelöschten Kalks der in Schritt (c) gebildeten Suspension, indem genügend viel kohlendioxidhaltiges Gas durch diese hindurchgeleitet wird, um zu bewirken, daß der pH der Suspension auf im wesentlichen neutral abfällt; und
   e) Abtrennen des gefällten Calciumcarbonats, das in Schritt (d) gebildet wurde, vom wäßrigen Medium in dem es suspendiert ist;
   dadurch gekennzeichnet, daß die besagte Hochenergie- und Hochschubkraft-Rührbewegung vor der besagten Carbonatisierung gemäß Schritt (d) beendet wird, und daß die besagte Suspension während der besagten Carbonatisierung gemäß Schritt (d) einer im wesentlichen kontinuierlichen Rührbewegung unterworfen wird.

2. Verfahren nach Anspruch 1, das so geartet ist, daß bei Beendigung des Schrittes (a) eine Suspension hergestellt ist, die eine Calciumhydroxidkonzentration zwischen 0,7M und 4M (5 und 30 Gewichtsprozent) aufweist.

3. Verfahren nach einem der Ansprüche 1 oder 2 , wobei das besagte wäßrige Medium auf einer Temperatur im Bereich zwischen 30 und 50 °C gehalten wird.

4. Verfahren nach einem der Ansprüche 1 bis 3, wobei das besagte wäßrige Medium einer im wesentlichen kontinuierlichen Rührbewegung während des Schrittes (a) unterworfen wird.

5. Verfahren nach einem der Ansprüche 1 bis 4, wobei die besagte Suspension gelöschten Kalks auf eine Konzentration von nicht mehr als 15 Gewichtsprozent verdünnt und während des Schrittes (d) auf einer Temperatur im Bereich von 40 bis 65 °C gehalten wird.

6. Verfahren nach einem der Ansprüche 1 bis 5, wobei das besagte, carbonatisierende Gas zwischen 5 und 50 Volumprozent Kohlendioxid enthält und der Rest Luft oder Stickstoff ist.

7. Verfahren nach einem der Ansprüche 1 bis 6, wobei das besagte carbonatisierende Gas in Form feiner Blasen in die Suspension fein verteilten gelöschten Kalks eingelassen wird.

8. Verfahren nach einem der Ansprüche 1 bis 7, wobei das besagte carbonatisierende Gas mit einer Geschwindigkeit im Bereich von 0,02 bis 0,10 Mol Kohlendioxid pro Minute pro Mol Calciumhydroxid in die Suspension des fein dispergierten gelöschten Kalks eingelassen wird.

9. Verfahren nach einem der Ansprüche 1 bis 8, wobei die besagte Suspension während des Schrittes (d) im wesentlichen kontinuierlich mit einer Peripheriegeschwindigkeit von wenigstens 600 cm pro Sekunde gerührt wird.

10. Verfahren nach einem der Ansprüche 1 bis 9, wobei der Zusatz des besagten carbonatisierenden Gases gestoppt wird, wenn der pH der Suspension auf im wesentlichen neutral abgefallen ist.

**Revendications**

1. Procédé de préparation de carbonate de calcium précipité comprenant les étapes suivantes :
   a) l'extinction de la chaux vive en milieu aqueux, de façon à obtenir une suspension d'hydroxyde de calcium ;
   b) le passage de la suspension d'hydroxyde de calcium à travers un tamis ayant des ouvertures de taille comprise entre 40 et 70 microns ;
   c) la conversion de l'hydroxyde de calcium en un état finement dispersé, en soumettant la suspension à une agitation de fort cisaillement et de haute énergie ;
   d) la carbonatation de la chaux éteinte finement dispersée de la suspension formée dans l'étape (c) en faisant passer à travers celle-ci une quantité de gaz, comprenant le dioxyde de carbone, suffisante pour abaisser le pH de la suspension sensiblement jusqu'à la neutralité ; et
   e) la séparation du carbonate de calcium précipité, formé dans l'étape (d), du milieu aqueux dans lequel il est en suspension ; caractérisé en ce qu'on met fin à ladite agitation de fort cisaillement et de haute énergie avant la carbonatation de l'étape (d) et en ce que ladite suspension est soumise à une agitation sensiblement continue pendant ladite carbonatation de l'étape (d).

2. Procédé selon la revendication 1, caractérisé en ce qu'il produit, au terme de l'étape (a), une suspension ayant une concentration en hydroxyde de calcium comprise entre 0,7M et 4M (5 à 30% en poids par volume).

3. Procédé selon la revendication 1 ou 2, dans lequel ledit milieu aqueux est maintenu à une température comprise entre 30 et 50°C.

4. Procédé selon l'une quelconque des revendications 1 à 3, dans lequel ledit milieu aqueux est soumis à une agitation sensiblement continue pendant l'étape (a).

5. Procédé selon l'une quelconque des revendications 1 à 4, dans lequel ladite suspension de chaud éteinte est diluée jusqu'à une concentration qui n'est pas supérieure à 15% en poids par volume et maintenue à une température Comprise entre 40 et 65°C pendant l'étape (d).

6. Procédé selon l'une quelconque des revendications 1 à 5, dans lequel ledit gaz carbonatant renferme de 5% à 50% en volume de dioxyde de carbone, le reste étant constitué d'air ou d'azote.

7. Procédé selon l'une quelconque des revendications 1 à 6, dans lequel ledit gaz carbonatant est introduit dans la suspension de chaux éteinte finement dispersée sous forme de fines bulles.

8. Procédé selon l'une quelconque des revendications 1 à 7, dans lequel ledit gaz carbonatant est introduit dans la suspension de chaux éteinte finement divisée à un débit compris entre 0,02 et 0,10 mole de dioxyde de carbone par minute et par mole d'hydroxyde de calcium.

9. Procédé selon l'une quelconque des revendications 1 à 8, dans lequel ladite suspension est agitée de façon sensiblement continue, à une vitesse périphérique d'au moins 600 cm par seconde tout au long de l'étape (d).

10. Procédé selon l'une quelconque des revendications 1 à 9, dans lequel l'addition dudit gaz carbonatant est interrompue lorsque le pH de la suspension a été abaissé sensiblement jusqu'à la neutralité.